(19) Europäisches Patentamt
European Patent Office
Office européen des brevets

(11) EP 0 785 636 A2

(12) EUROPEAN PATENT APPLICATION

(43) Date of publication:
23.07.1997 Bulletin 1997/30

(51) Int. Cl.⁶: H04B 3/00

(21) Application number: 97100804.0

(22) Date of filing: 20.01.1997

(84) Designated Contracting States:
DE FR GB IT NL

(30) Priority: 19.01.1996 US 10255

(71) Applicant: TEXAS INSTRUMENTS
INCORPORATED
Dallas Texas 75265 (US)

(72) Inventor: Chen, Walter Y.
Plano, TX 75023 (US)

(74) Representative: Schwepfinger, Karl-Heinz, Dipl.-
Ing.
Prinz & Partner,
Manzingerweg 7
81241 München (DE)

(54) **Apparatus and method in or relating to signal processing techniques**

(57) Radio frequency interference on a VDSL line is cancelled in an adaptive filter coupled between a subscriber line and a VDSL receiver. An antenna placed in the vicinity of the VDSL receiver is used to receive radio frequency signals which may interfere with communications on the VDSL line and these signals are input into the adaptive filter for canceling the interference on the VDSL line. The adaptive filter correlates the antenna signal and the subscriber line signal on the VDSL line in order to cancel the radio frequency interference on the subscriber line signal.

FIG. 2

## Description

### BACKGROUND OF THE INVENTION

The present invention relates to signal processing techniques, and more particularly to radio frequency interference cancellation for a VDSL telephone line. The voice band modem has been used as a primary access method to connect personal computers to a computer network. With the power of advanced digital signal processing, the throughput of a voice band modem has been increased to about 30 kilobits per second (kbps) which is about the limit defined by the channel capacity for the 3 kHz voice telephone network. This 3 kHz bandwidth is confined by the public switched network where the voice is digitized at a rate of about 8 kilo-samples per second.

On the other hand, there is no hard bandwidth limitation on telephone subscriber lines between the central office (CO) and subscribers. The transmission environment on the subscriber loop is defined by the loop loss which is distance dependent and crosstalk noises which partially depend on transmission system architecture. The crosstalk is defined as the noise caused by signal on adjacent subscriber lines. The ISDN Basic Rate Access channel which is based on the telephone subscriber has a signal bandwidth of more than 40 kHz. The Digital Subscriber Lines (DSL) used for a ISDN Basic Rate Access channel have a transmission throughput of about 160 kbps. The transmission throughput of DSL is limited by a serving distance of 18,000 feet and a 49-disturber self Near End Crosstalk (NEXT) environment.

For a short serving distance, 12,000 feet, the High-bit-rate Digital Subscriber Lines (HDSL), which have a signal bandwidth of 200 kHz, could have a transmission throughput of 800 kbps also under 49-disturber self NEXT environment. For a combination of DSL/HDSL NEXT and self Far End Crosstalk (FEXT) environment, Asymmetrical Digital Subscriber Lines (ADSL), which have a signal bandwidth of 1 MHz, could have a transmission throughput of 6.4 Mbps. For other related technologies, such as Fiber Distributed Digital Interface (FDDI), Fiber To The Curb (FTTC), and Fast Ethernet, a twisted pair has been used for transmission at a rate up to 100 megabits per second (Mbps) at short distances.

As optical fiber technology matures, its associated equipment costs will come down and optical fiber will be brought closer to the subscriber. As a result, the required copper twisted pair telephone subscriber line will become shorter. This will allow for the development of higher transmission throughput Very-high-bit-rate Digital Subscriber Lines (VDSL) technology. Although the details of the VDSL are under development, the general characteristics of VDSL are as follows: VDSL would have a signal band of between 6-25 MHz and employ frequency division duplex transmission having asymmetrical throughout with the downstream rate of 10-100 times that of the upstream with the downstream throughput being between 13 Mbps and 50 Mbps per second. Extensive signal processing is expected to be utilized to bring the throughput close to the channel capacity.

As a result of the utilization of such a wide bandwidth for VDSL, off the air radio signals may interfere with a VDSL receiver. Common radio interference sources are international short-wave stations and local amateur radio operators. International short-wave radio has frequency bands at 6 MHz, 7.5 MHz, 9.5 MHz, 12 MHz, for example. There are usually tens of radio stations active at each frequency band. Amateur radio has a group of similar frequency bands at 1.8 MHz, 3.5 MHz, 7 MHz, 10 MHz, 14 MHz, for example. Amateur radio signals may employ single side band modulation that makes the transmit power non-stationary.

The field strength of international short-wave radio signals is typically between 10 to 70 dB 1V/m. Short-wave radio interference could come from anywhere on the globe. An individual amateur radio transmitter could generate a field strength of 140 dB 1V/m at a distance of 10 meters. The field strength becomes weaker as the distance increases; being reduced to 100 dB 1V/m at a distance of 1000 meters. Differential mode reception would produce a suppression of 30 to 35 dB in the interfering common mode signal. This could still result in a differential voltage at the front end of a VDSL receiver of the order of a few hundred millivolts at a distance of 10 meters.

Accordingly, there is a need for a technique for reducing the interference from radio frequency signals that may be picked up by the twisted pair loop telephone subscriber line between the optical fiber node and the VDSL receiver so that VDSL can be universally employed and not be dependent upon the location of the subscriber nor become unusable at certain times due to short wave transmissions.

### SUMMARY OF THE INVENTION

It is a general object of the present invention to reduce interference on a VDSL line coupled to a VDSL receiver.

Another object of the invention is to reduce radio frequency interference signals on a VDSL line coupled to the VDSL receiver.

A further object of the invention is to utilize an antenna to pick up signals which may interfere with signals on a VDSL line and use these antenna signals to cancel interfering signals on the VDSL line.

A still further object of the invention is to cancel radio frequency interference on a VDSL line thereby allowing the network to achieve its throughput potential.

These and other objects, advantages and features are achieved, in accordance with one aspect of the invention by a VDSL interference cancellation apparatus. A twisted pair loop subscriber line is coupled to a VDSL receiver. An antenna is coupled to an adaptive filter which is also coupled between the subscriber line and the VDSL receiver for canceling radio frequency interference on the subscriber line.

Another aspect of the invention includes a method of reducing interference on a twisted pair loop subscriber line coupled to a VDSL receiver. Radio frequency signals which will interfere with signals on the subscriber line are received via an antenna to generate an antenna signal. The radio frequency interference signals are cancelled in an adaptive filter coupled between the subscriber line and the VDSL receiver.

A further aspect of the invention comprises an interference cancellation apparatus for use in a VDSL transmission system having a twisted pair loop subscriber line and a VDSL receiver, in which the interference cancellation apparatus is coupled between the subscriber line and the receiver. An antenna receives interference signals and generates an antenna signal. Noise canceling means receives the antenna signal and a signal transmitted on the subscriber line for canceling interference on the subscriber line by correlating the antenna signal and the subscriber line signal.

A still further aspect of the invention includes an interference cancellation apparatus for use in a VDSL transmission system having a twisted pair loop subscriber line and a VDSL receiver, in which the interference cancellation apparatus is coupled between the subscriber line and the VDSL receiver. An antenna local to the apparatus receives radio frequency signals in the range of substantially 1-25 MHz which interfere with signals on the subscriber line for generating an antenna signal. An adaptive filter receives the antenna signal and the signals on the subscriber line for canceling the radio frequency interference on the subscriber line by correlating the antenna signal and the subscriber line signal, in which the adaptive filter comprises a first bandpass filter coupled to the antenna, a first demodulator coupled to the first bandpass filter, a first A/D converter coupled to the first demodulator, a second bandpass filter coupled to the subscriber line, a second demodulator coupled to the second bandpass filter, a second A/D converter coupled to the second demodulator, and a correlator coupled to the first and second A/D converters for reducing interference in the subscriber line.

BRIEF DESCRIPTION OF THE DRAWINGS

The present invention will now be further described, by way of example, with refernce to the accompanying drawings in which:-

Figure 1 is a graph showing the 70 dB loss bandwidth of a 26 gauge line versus length;

Figure 2 shows a block diagram of the present invention installed at a subscriber location; and

Figure 3 is a block diagram of the interference canceler circuit.

DETAILED DESCRIPTION

The insertion loss of a 26 AWG telephone loop can be expressed as:

$$L \approx 8.686d\zeta\sqrt{f}$$

where d is the loop length in feet, $\zeta=9 \times 10^{-7}$ and f is the frequency in Hertz. The 70 dB loss bandwidth for the 26 AWG telephone loop of length d can be expressed as:

$$f = \frac{8.1x10^{13}}{d^2}$$

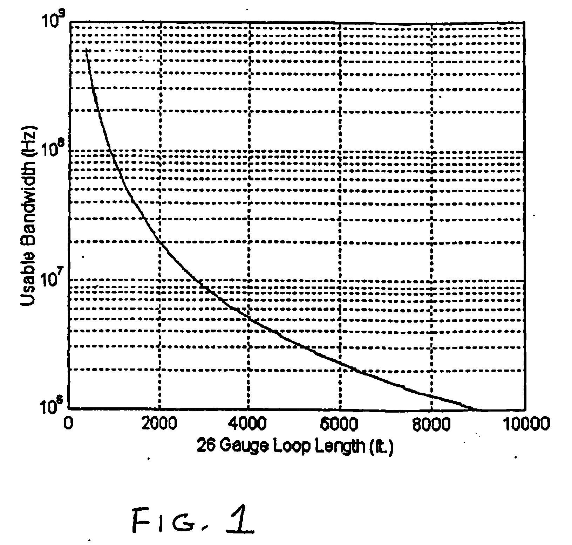

Figure 1 is a plot of the loss bandwidth verses length for a 26 AWG loop. This plot shows that the useable bandwidth can be as high as 100 MHz for a 900 foot long, 26 AWG loop. The transmission throughput can be a multiple of the usable bandwidth if the noise level is lower than that required by a particular modulation scheme under a certain desired error rate. The throughput potential is also dependent upon the number of bits per Hertz that can be provided by the modulation scheme that is utilized. This in turn is dependent upon the noise in the system. A channel with a 70 dB loss slope, however, needs to be compensated by extensive signal processing to reach its throughput potential. Referring to Figure 1, a loop of 3,000 feet has a usable bandwidth of approximately 10 MHz which could transmit 40 Mbps per second if a modulation scheme providing 4 bit/Hz is possible.

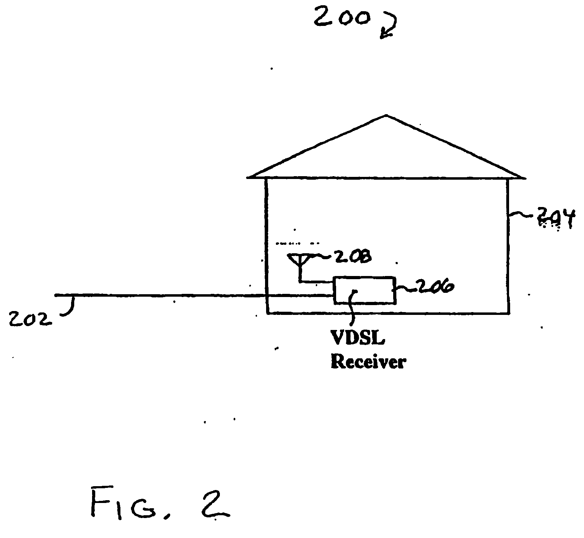

In order to cancel radio frequency noise found in this portion of the spectrum, the configuration shown in Figure 2 can be utilized. Figure 2 shows a VDSL system 200 having a VDSL receiver 206 within a residence 204 and coupled to a twisted pair telephone loop 202. Also coupled to the VDSL receiver 206 is an antenna 208 capable of receiving the radio frequency signals which interfere with VDSL communications. Although the antenna 208 is shown as within the residence or structure 204, the antenna may also be located outside the premises in the general vicinity of the receiver. The antenna 208 will pick up the same signals that are picked up by the twisted pair telephone loop which can be used within the VDSL receiver or in equipment located nearby and coupled to the receiver to cancel the radio frequency interference thereby allowing the network to achieve its full throughput potential.

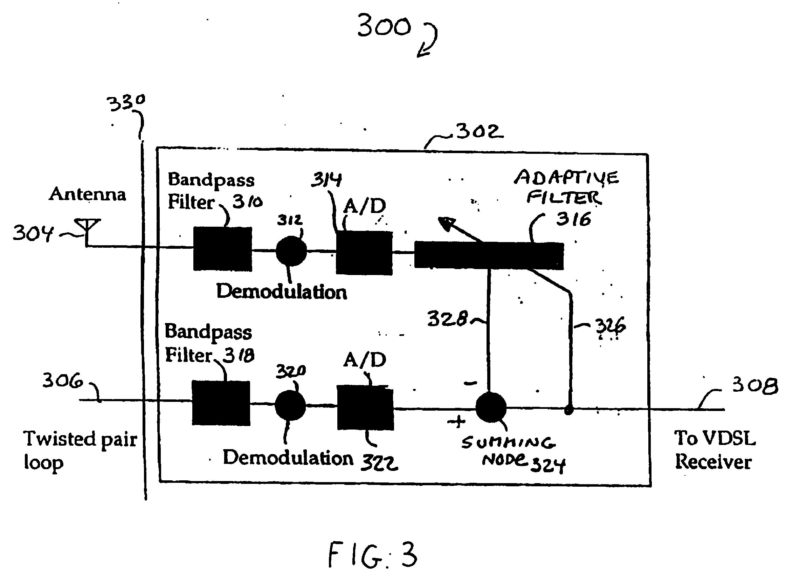

Apparatus for performing the cancellation of the radio frequency noise is shown in Figure 3 generally as 300. The apparatus 300 is shown separate from the VDSL receiver, but it could be incorporated within the receiver, if desired. The apparatus includes processing circuitry 302 coupled to the twisted pair telephone loop 306 and to an output line 308 which goes to the VDSL receiver. The processing circuitry 302 is also coupled to an antenna 304, which in Figure 3 is shown outside of the residence which is indicated schematically by the wall 330. As stated above, the antenna can be within or outside the residence but should be in the nearby vicinity of the twisted pair telephone loop so that it receives the same signals which are picked up by the telephone loop as interference signals.

The signals received by the antenna 304 are passed through bandpass filter 310 to remove signals that are outside the range of the signals which interfere with transmission on the telephone loop. The output of the bandpass filter is passed through demodulator 312 which translates the carrier frequencies of the received signals to a bass band signal. If the frequencies of interest are low enough, for example 1 MHz, it may be possible to eliminate the modulator 312 and process the signals directly at the carrier frequencies. The output of the demodulator 312 passes to A/D converter 314 in which the signals are digitized. The digitized signals are then input to adaptive filter 316.

Similarly, the VDSL signals on twisted pair telephone loop 306 are passed through a bandpass filter 318 to eliminate signals outside the band of interest. The output of bandpass filter 318 is coupled to demodulator 320 in which the carrier frequency signals are reduced to the base band signal. As with the signals from the antenna, if the signals are low enough in frequency, the demodulator 320 can be eliminated and the signals processed directly at the carrier frequency rate. The output of demodulator 320 is digitized in A/D converter 322 the output of which is one input to summing node 324 at the output of the adaptive filter 316.

The output of the adaptive filter 316 on line 328 is fed to the negative input to summing node 324. The result of the summation at node 324 is fed back to the adaptive filter via line 326.

The adaptive filter 316 can be the type of adaptive filter utilized in acoustic echo cancellation, which filters are well known in the art. Adaptive filters are utilized in telephone systems to remove the echo produced by hands-free telephone (speaker phones), for example where the output of the speaker may be picked up via the microphone of the hands-free telephone and transmitted back to the far end user of the telephone system. Adaptive filters for acoustic echo cancellation are known, for example, from N.D. Degan and C. Prati, "Acoustic noise analysis and speech enhancement techniques for mobile radio applications," Signal Processing, No. 15, pp. 43-56, 1988, North-Holland.

As is well know in the art, the adaptive filter provides a correlation function between the signals received at the antenna and the signals received via the twisted pair telephone loop. Although the signals should be of the same frequency, normally be of the same amplitude or phase. The adaptive filter will adjust the coefficient of the filter in order to produce maximum cancellation of the interference signals at the summing node 324.

While a particular embodiment of the present invention has been disclosed herewith, certain changes and modifications will readily occur to those skilled in the art.

For example, the choice for an adaptive filter is depended upon the parameters chosen for VDSL transmission, which parameters are still under development. The need for demodulation in the noise cancellation apparatus will depend upon the frequency of the interfering signals and the ability of the digital processor to process high frequency signals. The location of the antenna need only be near the twisted pair telephone loop and is a matter of design choice.

## Claims

1.  A VDSL interference cancellation apparatus comprising:

    means for coupling a twisted pair loop subscriber line to a VDSL receiver;
    an antenna;
    means for coupling an adaptive filter to the antenna and between the subscriber line and the VDSL receiver for canceling radio frequency interference on the subscriber line.

2.  The apparatus of Claim 1, wherein the adaptive filter comprises:

    a first bandpass filter coupled to the antenna;
    a first A/D converter coupled to the first bandpass filter;
    a second bandpass filter coupled to the subscriber line;
    a second A/D converter coupled to the second bandpass filter;
    a correlator coupled to the first and second A/D converters for reducing interference in the subscriber line.

3.  The apparatus of Claim 2 further comprising:

    a first demodulator coupled to the first bandpass filter;
    a second demodulator coupled to the second bandpass filter;
    wherein the first A/D converter is coupled to the first demodulator and the second A/D converter is coupled to the second demodulator.

4.  The apparatus of Claim 2 or Claim 3, wherein the correlator utilizes a FIR filter.

5.  The apparatus of any preceding claim, wherein the radio frequency interference is in the range of substantially 1-25 MHz.

6.  The apparatus of any preceding claim, wherein the antenna is local to the VDSL receiver.

7.  A method of reducing interference on a twisted pair loop subscriber line coupled to a VDSL receiver comprising the steps of:

receiving radio frequency signals which will interfere with signals on the subscriber line via an antenna to generate an antenna signal; canceling the radio frequency interference signals in an adaptive filter coupled between the subscriber line and the VDSL receiver.

8. The method of Claim 7, wherein the canceling step comprises:

bandpass filtering the antenna signal for generating a filtered antenna signal; converting the filtered antenna signal to a first digital signal; bandpass filtering signals on the subscriber line for generating a filtered line signal; converting the second demodulated signal to a filtered line signal; correlating the first and second digital signals for reducing interference in the signals on the subscriber line.

9. The method of claim B further comprising the steps of:

demodulating the filtered antenna signal for generating a first demodulated signal; demodulating the filtered line signal for generating a second demodulated signal; wherein the first demodulated signal is converted to the first digital signal and the second demodulated signal is converted to the second digital signal.

10. The method of any of Claims 7 to 9, wherein the receiving step comprises receiving radio frequency interference is in the range of substantially 1-25 MHz.

11. The method of Claims 7 to 10, further comprising providing the antenna in a region that is local to the VDSL receiver.

12. The method of Claims 7 to 11, further comprising providing a correlator that utilizes a FIR filter.

13. In a VDSL transmission system having a twisted pair loop subscriber line and a VDSL receiver, an interference cancellation apparatus for coupling between the subscriber line and the receiver comprising:

an antenna receiving interference signals and generating an antenna signal; noise canceling means for receiving the antenna signal and a signal transmitted on the subscriber line for canceling interference on the subscriber line by correlating the antenna signal and the subscriber line signal.

14. The apparatus of claim 13 wherein the noise canceling means comprises an adaptive filter.

15. The apparatus of Claim 13 or Claim 14, wherein the antenna is local to the noise canceling means.

16. The apparatus of any of Claim 13 to 15, wherein the interference is radio frequency signals.

17. The apparatus of Claim 16, wherein the radio frequency signals are in the range of substantially 1-25 MHz.

18. The apparatus of Claims 13 to 17, wherein the adaptive filter comprises:

a first bandpass filter coupled to the antenna; a first A/D converter coupled to the first bandpass filter; a second bandpass filter coupled to the subscriber line; a second A/D converter coupled to the second bandpass filter; a correlator coupled to the first and second A/D converters for reducing interference in the subscriber line.

19. The apparatus of claim 18 further comprising:

a first demodulator coupled to the first bandpass filter; a second demodulator coupled to the second bandpass filter; wherein the first A/D converter is coupled to the first demodulator and the second A/D converter is coupled to the second demodulator.

20. A VDSL transmission system having a twisted pair loop subscriber line and a VDSL receiver, an interference cancellation apparatus for coupling between the subscriber line and the VDSL receiver comprising:

an antenna local to the apparatus for receiving radio frequency signals in the range of substantially 1-25 MHz which interfere with signals on the subscriber line for generating an antenna signal; an adaptive filter for receiving the antenna signal and the signals on the subscriber line for canceling the radio frequency interference on the subscriber line by correlating the antenna signal and the subscriber line signal, the adaptive filter comprising:

a first bandpass filter coupled to the antenna;

a first demodulator coupled to the first bandpass filter;

a first A/D converter coupled to the first demodulator;

a second bandpass filter coupled to the subscriber line;

a second demodulator coupled to the second bandpass filter;

a second A/D converter coupled to the second demodulator;

a correlator coupled to the first and second A/D converters for reducing interference in the subscriber line.

FIG. 1

FIG. 2

FIG. 3

EP 0 785 636 A2